(19) Europäisches Patentamt
European Patent Office
Office européen des brevets

(11) **EP 4 618 025 A1**

(12) **EUROPEAN PATENT APPLICATION**
published in accordance with Art. 153(4) EPC

(43) Date of publication:
**17.09.2025 Bulletin 2025/38**

(21) Application number: **24773826.3**

(22) Date of filing: **07.02.2024**

(51) International Patent Classification (IPC):
**G06T 15/60** *(2006.01)*      **G06T 15/50** *(2011.01)*

(52) Cooperative Patent Classification (CPC):
**G06T 15/60; G06T 15/50;** G06T 2215/12

(86) International application number:
**PCT/CN2024/076534**

(87) International publication number:
**WO 2024/193258 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.03.2023 CN 202310288426**

(71) Applicant: **Tencent Technology (Shenzhen)
Company Limited
Shenzhen, Guangdong 518057 (CN)**

(72) Inventors:
• **ZHAO, Lei**
  **Shenzhen, Guangdong 518057 (CN)**
• **GUO, Xiaoxin**
  **Shenzhen, Guangdong 518057 (CN)**
• **DENG, Jun**
  **Shenzhen, Guangdong 518057 (CN)**

(74) Representative: **EP&C
P.O. Box 3241
2280 GE Rijswijk (NL)**

(54) **SHADOW RENDERING METHOD AND APPARATUS, COMPUTER DEVICE, AND STORAGE MEDIUM**

(57) A shadow rendering method, executed by a computer device. The method comprises: determining a shadow space distance of a pixel in a screen space under a light source of a virtual scene at a viewing angle observing the virtual scene, the shadow space distance referring to a distance between a world space position of the pixel and a shadow camera located at a light source position in a shadow camera space (202); performing linear transformation of the shadow space distance of the pixel under the light source on the basis of a linear transformation rendering parameter of the light source, to obtain a shadow attenuation factor of the pixel, the linear transformation rendering parameter being determined according to a preset condition set for the light source (204); rendering a shadow of the pixel on the basis of the shadow attenuation factor of the pixel, to obtain a shadow rendering result of the virtual scene at the observation viewing angle (206).

FIG. 2

## Description

RELATED APPLICATION

This application claims priority to Chinese Patent Application No. 2023102884260, entitled "SHADOW RENDERING METHOD AND APPARATUS, COMPUTER DEVICE, AND STORAGE MEDIUM" filed on March 23, 2023.

FIELD OF THE TECHNOLOGY

Embodiments of this application relate to the field of shadow rendering technologies, and in particular, to a shadow rendering method and apparatus, a computer device, and a storage medium.

BACKGROUND OF THE DISCLOSURE

With the development of computer technologies, a shadow rendering technology has emerged. The shadow rendering technology is configured for rendering a shadow. The shadow includes a soft shadow and a hard shadow. The hard shadow has a prominent boundary, while the soft shadow gradually transitions to shadowless areas. Therefore, the soft shadow is closer to a real-world shadow.

In a conventional technology, an effect of the soft shadow can be achieved by calculating a distance between a projection area and an occluder.

However, the conventional method implementing the soft shadow has high calculation complexity, which leads to relatively low efficiency in shadow rendering.

SUMMARY

In view of this, for the foregoing technical problem, it is necessary to provide a shadow rendering method and apparatus, a computer device, a computer-readable storage medium, and a computer program product, which can improve a rendering effect of a shadow.

In an aspect, this application provides a shadow rendering method, the method including:

performing linear transformation on a shadow space distance of a pixel under a light source of a virtual scene, to obtain a shadow attenuation factor of the pixel, the shadow space distance being a distance between a world space position of the pixel and a shadow camera located at a position of the light source in a shadow camera space; and

rendering a shadow of the pixel based on the shadow attenuation factor.

In another aspect, this application further provides a shadow rendering apparatus. The apparatus includes:

a factor determining module, configured to perform linear transformation on a shadow space distance of a pixel under a light source of a virtual scene, to obtain a shadow attenuation factor of the pixel, the shadow space distance being a distance between a world space position of the pixel and a shadow camera located at a position of the light source in a shadow camera space; and

a shadow rendering module, configured to render a shadow of the pixel based on the shadow attenuation factor.

In another aspect, this application further provides a computer device. The computer device includes a memory and a processor, the memory having a computer program stored therein, the processor, when executing the computer program, implementing operations of the shadow rendering method.

In another aspect, this application further provides a computer-readable storage medium. The computer-readable storage medium has a computer program stored therein. The computer program, when executed by a processor, implements operations of the shadow rendering method.

In another aspect, this application further provides a computer program product. The computer program product includes a computer program. The computer program, when executed by a processor, implements operations of the shadow rendering method.

Details of one or more embodiments of this application are described in the accompanying drawings and the descriptions below. Other features, objectives, and advantages of this application become apparent from the specification, the accompanying drawings, and the claims.

BRIEF DESCRIPTION OF THE DRAWINGS

To describe the technical solutions in the embodiments of this application or the related art more clearly, the following briefly describes the accompanying drawings required in the description of the embodiments or the related art. Apparently, the accompanying drawings in the following descriptions show merely some embodiments of this application, and a person of ordinary skill in the art may still derive other drawings from these accompanying drawings without creative efforts.

FIG. 1 is a diagram of an application environment of a shadow rendering method according to some embodiments.

FIG. 2 is a schematic flowchart of a shadow rendering method according to some embodiments.

FIG. 3 is a diagram of comparison between shadow rendering effects according to some embodiments.

FIG. 4 is a schematic diagram of a relationship between a depth value and a shadow space distance according to some embodiments.

FIG. 5 is a schematic diagram of a relationship between a depth value and a shadow space distance according to some embodiments.

FIG. 6 is a schematic diagram of a relationship between a depth value and a shadow space distance according to some embodiments.

FIG. 7 is a schematic flowchart of a shadow rendering method according to some embodiments.

FIG. 8 is a diagram of comparison between shadow rendering effects according to some embodiments.

FIG. 9 is a block diagram of a structure of a shadow rendering apparatus according to some embodiments.

FIG. 10 is a diagram of an internal structure of a computer device according to some embodiments.

FIG. 11 is a diagram of an internal structure of a computer device according to some embodiments.

## DESCRIPTION OF EMBODIMENTS

The following clearly and completely describes the technical solutions in embodiments of this application with reference to the accompanying drawings in the embodiments of this application. It is clear that the described embodiments are only some of the embodiments of this application rather than all of the embodiments. Based on the embodiments of this application, all other embodiments obtained by a person of ordinary skill in the art without creative efforts shall fall within the protection scope of this application.

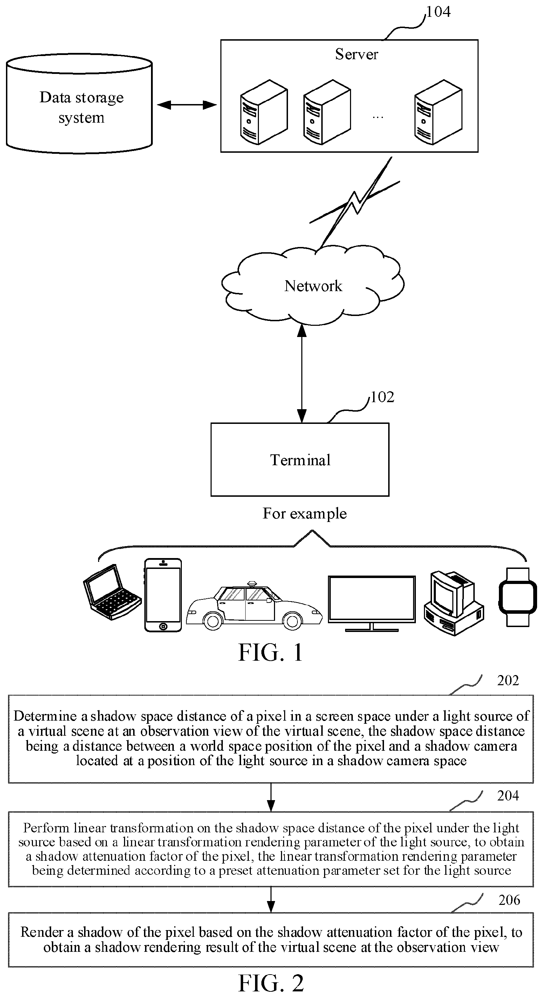

A shadow rendering method provided in embodiments of this application may be applied to an application environment shown in FIG. 1. A terminal 102 communicates with a server 104 through a network. A data storage system may store data that needs to be processed by the server 104. The data storage system may be integrated onto the server 104, or arranged on cloud or other servers.

In embodiments of the application, the terminal 102 may obtain a virtual scene from the server 104. To render a picture observed at an observation view of a virtual scene, in response to that there is a shadow in the picture, the terminal 102 may determine a shadow space distance of a pixel in a screen space under a light source of the virtual scene, perform linear transformation on the shadow space distance of the pixel under the light source based on a linear transformation rendering parameter of the light source to obtain a shadow attenuation factor of the pixel, and render a shadow of the pixel based on the shadow attenuation factor of the pixel, to obtain a shadow rendering result of the virtual scene at the observation view. The shadow space distance is a distance between a world space position of the pixel and a shadow camera located at a position of the light source in a shadow camera space. The linear transformation rendering parameter is determined according to a preset condition set for the light source. The terminal 102 may present the shadow rendering result, or may transmit the shadow rendering result to the server 104.

The terminal 102 may be, but is not limited to, various desktop computers, notebook computers, smart phones, tablet computers, Internet of Things devices, and portable wearable devices. The Internet of Thing device may be a smart speaker, a smart television, a smart air conditioner, a smart in-vehicle device, or the like. The portable wearable devices may be smart watches, smart bracelets, head sets, and the like. The server 104 may be an independent physical server, a server cluster or a distributed system including a plurality of physical servers, or may be a cloud server providing basic cloud computation services such as a cloud service, a cloud database, cloud computation, cloud functions, cloud storage, a network service, cloud communication, a middle-ware service, a domain name service, cloud security, network security services such as host security, a content delivery network (CDN), big data, artificial intelligence platforms, and the like. The terminal 102 and the server 104 may be connected directly or indirectly in a wired or wireless communication way. This is not limited in this application.

In some embodiments of the application, a shadow rendering method includes: performing linear transformation on a shadow space distance of a pixel under a light source of a virtual scene, to obtain a shadow attenuation factor of the pixel, the shadow space distance being a distance between a world space position of the pixel and a shadow camera located at a position of the light source in a shadow camera space; and rendering a shadow of the pixel based on the shadow attenuation factor. The shadow space distance of the pixel screen space under the light source of the virtual scene is obtained at an observation view of the virtual scene, and how to obtain the shadow space distance is further described in the following embodiments.

It is noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects.

In some embodiments, as shown in FIG. 2, a shadow rendering method is provided. The method may be performed by a terminal or a server, or may be performed jointly by the terminal and the server. An example in which the method is applied to the terminal 102 in FIG. 1 is configured for description.

It is noted that the embodiments described with reference to the drawings in this application are merely exemplary, and it is not limited in this application that the respective method must include all the steps as described and illustrated; rather, the shadow rendering method in the application may include some or all of the steps as listed, and the steps may be combined with each other arbitrarily to form various embodiments of the application.

In some embodiments, the method may include operation 202: Determine a shadow space distance of a pixel in a screen space under a light source of a virtual scene at an observation view of the virtual scene, the shadow space distance being a distance between a world space position of the pixel and a shadow camera located at a position of the light source in a shadow camera space.

The virtual scene is a virtual scene displayed (or provided) by an application program when run on a terminal. The virtual scene may be a simulated environment scene of a real world, or may be a semi-simulated semi-fictional three-dimensional environment scene, or may be an entirely fictional three-dimensional environment scene. The virtual scene may be any one of a two-dimensional virtual scene, a 2.5-dimensional virtual scene, and a three-dimensional virtual scene. The observation view may be any view of the virtual scene. The virtual scene includes, but is not limited to, scenes of a movie and television special effect, a game, sight glass simulation, visual design, virtual reality (VR), industrial simulation, and digital culture and creation, or the like.

The shadow camera is located at a position of the light source of the virtual scene, and the virtual scene is observed from an irradiation direction of the light source. To be specific, an orientation of the shadow camera is consistent with the irradiation direction of the light source. Furthermore, the shadow camera is a camera used when the virtual scene is observed from the position of the light source, and an observation direction of the shadow camera is consistent with the irradiation direction of the light source. The shadow camera space is a three-dimensional coordinate system established by using a position of the shadow camera as an origin. The shadow camera space may alternatively be understood as a light space of the light source, and the light space of the light source is a three-dimensional coordinate system established by using the light source as an origin.

A world space refers to a three-dimensional space in which the virtual scene is located, and a size of the world space may be user-defined. For example, the world space is a three-dimensional space with a length of 100 meters, a width of 100 meters, and a height of 100 meters. The world space position refers to a position in the world space. A screen space refers to a two-dimensional space of a screen. A size of the screen space is a size of a screen and takes a pixel as a unit.

The world space position of the pixel is a world space position of the pixel after a target scene area is projected to the screen space. The target scene area is a scene area observed at the observation view of the virtual scene. The light source may be a light source irradiating the target scene area in the virtual scene. The light source refers to an object that can emit light by itself and that is emitting light, such as the sun, an electric light, or a burning substance. The light source in the virtual scene is a series of illumination data that can truly simulate an illumination effect of the light source in reality.

In some embodiments, the terminal may determine the world space position corresponding to each pixel in the screen space after the target scene area is projected to the screen space. The target scene area is a scene area observed at the observation view of the virtual scene. A color value of the pixel is determined by a color value at the world space position corresponding to the pixel. The world space position corresponding to the pixel may be, for example, a position on an object in the world space. To render the light source, for the world space position of each pixel, the terminal may convert the world space position into a position in the shadow camera space, to obtain a position of the world space position in the shadow camera space, i.e. a shadow space position.

In some embodiments, for each pixel, the terminal may determine the position of the shadow camera in the shadow camera space, to obtain the shadow space position of the shadow camera, and calculate a distance between the shadow space position corresponding to the world space position and the shadow space position of the shadow camera in an observation direction of the shadow camera. The calculated distance is the shadow space distance of the pixel under the light source.

In some embodiments, the method may further include operation 204: Perform linear transformation on the shadow space distance of the pixel under the light source based on a linear transformation rendering parameter of the light source, to obtain a shadow attenuation factor of the pixel, the linear transformation rendering parameter being determined according to a preset condition set for the light source.

The preset condition may include a preset attenuation parameter, and the preset attenuation parameter includes at least two of an attenuation start distance, an attenuation length, or an attenuation end distance. The attenuation start distance is a distance between a start position of shadow attenuation and the shadow camera in the shadow camera space. The distance between the start position of shadow attenuation and the light source may be a distance between the start position of shadow attenuation and the shadow space position of the shadow camera in an observation direction of the shadow camera. The shadow space position of the shadow camera is a position of the shadow camera in the shadow camera space. The observation direction of the shadow camera is an orientation of the shadow camera. The shadow space position of the shadow camera is a position of the shadow camera in the shadow camera space. The shadow camera space may be identified by using a three-dimensional coordinate system, and a direction of one coordinate axis in the three-dimensional coordinate system is the orientation of the shadow camera. For example, the direction of a Z axis in the three-dimensional coordinate system is the orientation of the shadow camera, so that the observation direction of the shadow camera is the direction of the Z axis in the three-dimensional coordinate system.

The attenuation end distance is a distance between an end position of shadow attenuation and the shadow camera in the shadow camera space. The distance between the end position of the shadow attenuation and the shadow camera may be a distance between the end position of the shadow attenuation and the shadow space position of the shadow camera in the observation direction of the shadow camera. The attenuation length represents a difference between an attenuation start distance and an attenuation end distance, and a result obtained by summing the attenuation start distance and the attenuation length is the attenuation end distance.

The shadow attenuation factor affects a shadow intensity of the shadow rendered at the pixel. A larger shadow attenuation factor indicates lower shadow intensity, resulting in a less prominent shadow presented at the pixel. A smaller shadow attenuation factor indicates higher shadow intensity, resulting in a more prominent shadow presented at the pixel.

In some embodiments, the shadow attenuation factor may be a result obtained by performing linear transformation directly on the shadow space distance by using the linear transformation rendering parameter. The linear transformation rendering parameter satisfies conditions including: in response to that the shadow space distance is consistent with the attenuation start distance, a result of performing linear transformation on the shadow space distance by using the linear transformation rendering parameter is a first preset value, and in response to that the shadow space distance is consistent with the attenuation end distance, a result of performing linear transformation on the shadow space distance by using the linear transformation rendering parameter is a second preset value. The first preset value is less than the second preset value. The first preset value is, for example, a numerical value around 0, and may be, for example, 0 or 0.1. The second preset value is, for example, a numerical value around 1, and may be, for example, 1 or 0.9. Therefore, the result obtained by performing linear transformation on the depth-related value is greater than or equal to the first preset value and less than or equal to the second preset value. The linear transformation rendering parameter is a parameter representing a linear relationship between the shadow space distance and the shadow attenuation factor when the shadow is rendered. It is assumed that a linear relationship between a shadow space distance Y and a shadow attenuation factor X is $Y = aX + b$ for a light source, a and b are linear transformation rendering parameters of the light source.

In some embodiments, the shadow attenuation factor may be a result obtained by performing linear transformation indirectly on the shadow space distance by using the linear transformation rendering parameter. Specifically, the terminal may determine the depth-related value of the pixel based on the shadow space distance of the pixel under the light source. The depth-related value is linear with the shadow space distance, and the depth-related value is related to a target depth value. The target depth value is a depth value of the world space position at a position in the shadow camera space. The depth value is configured for representing a distance to the camera. A larger depth value indicates a longer distance to the camera. The target depth value represents a distance between the position of the world space position in the shadow camera space and the shadow camera. The terminal may perform linear transformation on the depth-related value of the pixel based on the linear transformation rendering parameter of the light source, to obtain the shadow attenuation factor of the pixel. The linear transformation rendering parameter satisfies a preset condition, and the preset condition includes: in response to that the shadow space distance is consistent with the attenuation start distance, a result of performing linear transformation on the depth-related value by using the linear transformation rendering parameter is a first preset value, and in response to that the shadow space distance is consistent with the attenuation end distance, a result of performing linear transformation on the depth-related value by using the linear transformation rendering parameter is a second preset value.

In some embodiments, the terminal may perform linear transformation on the depth-related value of the pixel based on the linear transformation rendering parameter of the light source, and use a result of the linear transformation as the shadow attenuation factor of the pixel. There may be one or a plurality of linear transformation rendering parameters, and a plurality refers to at least two. For example, $factor = posL.z * t1 + t2$, where factor represents a shadow attenuation factor, $posL.z$ represents a depth-related value, t1 and t2 are two linear transformation rendering parameters, and t1 and t2 satisfy the preset condition.

In some embodiments, the method may further include operation 206: Render a shadow of the pixel based on the shadow attenuation factor of the pixel, to obtain a shadow rendering result of the virtual scene at the observation view.

In some embodiments, the terminal may determine a first shadow intensity of the pixel under the light source. The first shadow intensity is a first preset intensity or a second preset intensity; and the first preset intensity represents that a light ray emitted from the light source to the world space position of the pixel is occluded. The second preset intensity represents that the light ray emitted from the light source to the world space position of the pixel is not occluded. The first preset intensity is greater than the second preset intensity. The first preset intensity is, for example, a numerical value around 1, and may be, for example, 1 or 0.9. The second preset intensity is, for example, a numerical value around 0, and may be, for example, 0 or 0.1. The terminal may attenuate the first shadow intensity of the pixel by using the shadow attenuation factor, to obtain the second shadow intensity of the pixel under the light source, and render the shadow of the pixel based on the second shadow intensity, to obtain the shadow rendering result of the virtual scene at the observation view. The second shadow intensity is in a negative correlation with the shadow attenuation factor.

In some embodiments, the terminal determines a world space position of each pixel in a screen space after a target scene area is projected to the screen space. The target scene area is a scene area observed at the observation view of the virtual scene. For each pixel, the terminal may obtain a shadow attenuation factor of the pixel according to the world space position of the pixel by using the method for determining the shadow attenuation factor provided in this application. In response to that the shadow attenuation factor of each pixel is obtained, the shadow of the pixel is rendered based on the shadow attenuation factor of the pixel, to obtain the shadow rendering result of the virtual scene at the observation view. The shadow rendering result includes a shadow generated by the light source, and presents a soft shadow effect. In response to that there are a plurality of light sources, rendering may be performed sequentially by using each light source, to obtain the shadow rendering result, so that the shadow rendering result includes a soft shadow generated by each light source.

In the foregoing shadow rendering method, the shadow space distance of the pixel in the screen space under the light source is determined at the observation view of the virtual scene, and the shadow space distance is the distance between the world space position of the pixel and the shadow camera located at the position of the light source in the shadow camera space; linear transformation is performed on the shadow space distance of the pixel under the light source based on the linear transformation rendering parameter of the light source, to obtain the shadow attenuation factor of the pixel, and the linear transformation rendering parameter is determined according to the preset condition (for example, may be a preset attenuation parameter) set for the light source; and the shadow of the pixel is rendered based on the shadow attenuation factor of the pixel to obtain the shadow rendering result of the virtual scene at the observation view. Because the shadow attenuation factor is obtained by performing linear transformation on the shadow space distance, the shadow attenuation factor is linear with the shadow space distance, so that the soft shadow effect may be achieved by attenuating the shadow by using the shadow attenuation factor.

Because the linear transformation is implemented by using the linear transformation rendering parameter of the light source, and the linear transformation rendering parameter is determined according to the preset attenuation parameter of the light source, the shadow attenuation factor may be simply and efficiently controlled by using the preset attenuation parameter of the light source, the calculation complexity is low and the rendering efficiency of the soft shadow is improved.

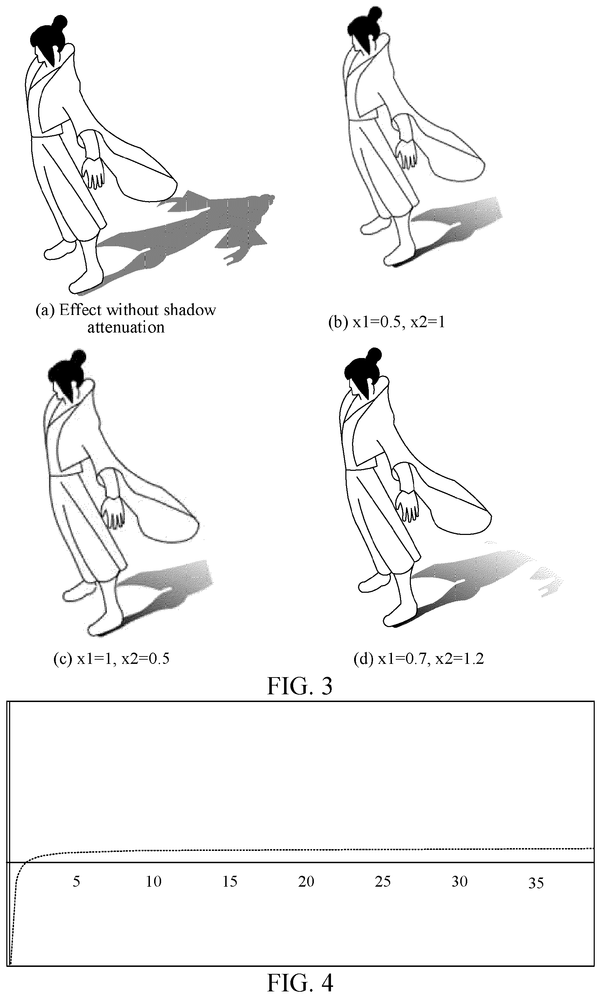

By using the shadow rendering method provided in this application, the soft shadow may be rendered, and a shadow effect may be conveniently and quickly controlled by adjusting a preset condition; and moreover, the calculation complexity is relatively low, and the shadow rendering efficiency is improved. An example in which the preset condition includes an attenuation start distance x1 and an attenuation length x2 is used. As shown in FIG. 3, (a) in FIG. 3 is an effect picture without shadow attenuation, i.e. an effect picture of a hard shadow, and (b) to (d) in FIG. 3 are effect pictures of shadow attenuation in response to of different values of x1 and x2. In (b), the attenuation is earlier than that in (c) and the attenuation distance is longer, but attenuation end distances in (b) and (c) are both 1.5, and in (d), the attenuation is earlier than that in (c) and the attenuation distance is longer. It can be learned that by using the shadow attenuation rendering method provided in this application, a shadow rendering effect may be flexibly adjusted, thereby causing the rendered shadow to be more realistic.

In some embodiments, the operation of performing linear transformation on the shadow space distance of the pixel under the light source based on a linear transformation rendering parameter of the light source, to obtain a shadow attenuation factor of the pixel includes: a depth-related value of the pixel is determined based on the shadow space distance of the pixel under the light source; and linear transformation is performed on the depth-related value of the pixel based on the linear transformation rendering parameter of the light source, to obtain the shadow attenuation factor of the pixel. In some embodiments, the depth-related value is linear with the shadow space distance, the depth-related value is related to a pixel depth value, and the pixel depth value is a depth value of the world space position of the pixel in the shadow camera space.

In some embodiments, the terminal may determine the pixel depth value according to the shadow space distance of the pixel under the light source. Methods for calculating the depth value include a forward depth calculation method and a reverse depth calculation method (a Reversed-Z method). In the forward depth calculation method, a depth value is in a positive correlation with a distance, so that the pixel depth value is in a positive correlation with the shadow space distance in the forward depth calculation method. In the reverse depth calculation method, the depth value is in a negative correlation with the distance, so that the pixel depth value is in a negative correlation with the shadow space distance in the reverse depth calculation method. A calculation manner of the depth value is related to a projection type of the shadow camera, and the projection type includes at least one of perspective projection and orthogonal projection.

In some embodiments, in response to that the projection type of the shadow camera is the perspective projection, and the depth calculation method is the forward depth calculation method, a calculation formula of the depth value d is formula (1):

$$d = \frac{f(x-n)}{(f-n)x}$$

, where

d represents the depth value, x represents the shadow space distance, n represents the shadow space distance of a near plane of the shadow camera, and the shadow space distance of the near plane represents a distance between the shadow camera and the near plane in the shadow camera space. f represents the shadow space distance of a far plane of the shadow camera, and the shadow space distance of the far plane represents a distance between the shadow camera and the far plane in the shadow camera space. In response to that a value of x in the formula (1) is the shadow space distance of the pixel under the light source, the calculated d in the formula (1) is the pixel depth value.

In some embodiments, in response to that the projection type of the shadow camera is the orthogonal projection, and the depth calculation method is the forward depth calculation method, a calculation formula of the depth value d is formula (2):

$$d = \frac{x-n}{f-n}$$

. In response to that a value of x in the formula (2) is the shadow space distance of the pixel under the light source, the calculated d in the formula (2) is the pixel depth value.

In some embodiments, in response to that the projection type of the shadow camera is the perspective projection, and the depth calculation method is the reverse depth calculation method, a calculation formula of the depth value d is formula (3):

$$d = \frac{(f-x)n}{(f-n)x}$$

. In response to that a value of x in the formula (3) is the shadow space distance of the pixel under the light source, the calculated d in the formula (3) is the pixel depth value.

In some embodiments, in response to that the projection type of the shadow camera is the orthogonal projection, and the depth calculation method is the reverse depth calculation method, a calculation formula of the depth value d is formula (4):

$$d = \frac{f-x}{f-n}$$

. In response to that a value of x in the formula (4) is the shadow space distance of the pixel under the light source, the calculated d in the formula (4) is the pixel depth value.

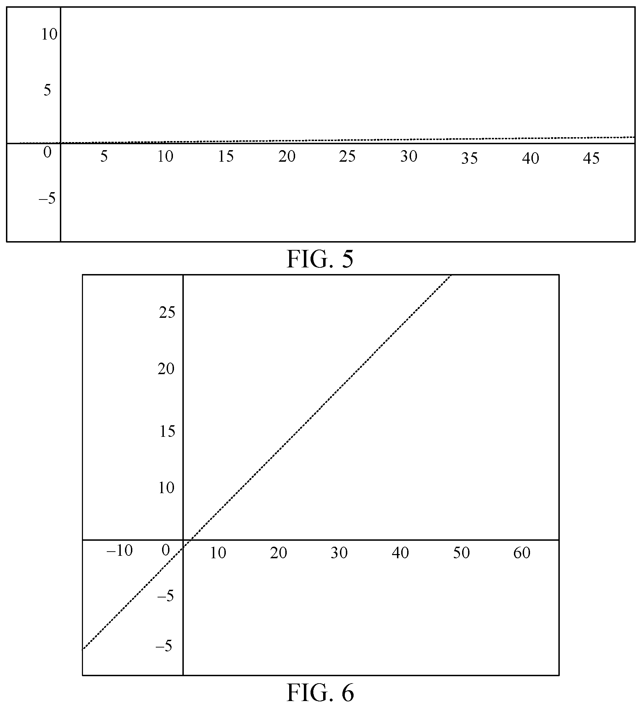

It may be seen from formulas (1) to (4) that in response to that the projection type is the perspective projection, the depth value d is linear with the shadow space distance x. FIG. 4 is a schematic diagram of d varying with x in formula (3). Apparently, d is linear with x. In response to that the projection type is the orthogonal projection, the depth value d is linear with the shadow space distance x. FIG. 5 is a schematic diagram of d varying with x in formula (2). Apparently, d is linear with x. Therefore, in response to that the projection type is the orthogonal projection, the terminal may use the pixel depth value as the depth-related value of the pixel. In response to that the projection type is the perspective projection, the terminal may use the depth value d1 without perspective division as the depth-related value of the pixel. In response to that the depth calculation method is the forward depth calculation method, a calculation formula of the depth value without the perspective division is formula (5):

$$d1 = \frac{f(x-n)}{(f-n)}$$

; in response to that the depth calculation method is the reverse depth calculation method, a calculation formula of the depth value without the perspective division is formula

(6): $$d1 = \frac{(f-x)n}{(f-n)}$$

; a difference between d and d1 lies in whether being divided by x, where division by x indicates that the perspective division is performed, and no division by x indicates that the perspective division is not performed. The depth value d1 without the perspective division is linear with the shadow space distance x. FIG. 6 is a schematic diagram of d1 varying with x in formula (5). Apparently, d1 is linear with x.

In some embodiments, the terminal may perform transformation on the world space positions of the pixel sequentially by using a view matrix, a projection matrix of the shadow camera, and a matrix of screen space jumping from normalized device coordinate (NDC) to the screen space, to obtain a transformed position. The transformed position may be represented by homogeneous coordinates (X, Y, Z, W), where W is configured for performing a zooming operation on the coordinates, w is the shadow space distance, Z represents a pixel depth value without the perspective division, Z/W is the pixel depth value, and (X/W, Y/W) is the screen space position. Therefore, the terminal may determine the shadow space distance, the pixel depth value without the perspective division, and the pixel depth value directly according to the transformed position.

In some embodiments, the linear transformation is performed on the depth-related value of the pixel based on the linear transformation rendering parameter of the light source, to obtain the shadow attenuation factor of the pixel. It can be learned that the shadow attenuation factor is linear with the shadow attenuation factor. Because the depth-related value is linear with the shadow space distance, the shadow attenuation factor is linear with the shadow space distance. Therefore, the shadow attenuation factor that is linear with the shadow space distance may be obtained by simple linear transformation, thereby improving the efficiency in determining the shadow attenuation factor, and improving the shadow rendering efficiency. In addition, the method for calculating the shadow attenuation factor provided in this application may be applicable to the perspective projection and the orthogonal projection, so that attenuation calculation methods for the perspective projection and the orthogonal projection are unified, thereby reducing computation load, and further improving the rendering efficiency.

In some embodiments, the preset condition includes at least two of an attenuation start distance, an attenuation length, or an attenuation end distance. The attenuation length is a difference between the attenuation start distance and the attenuation end distance. The linear transformation rendering parameter satisfies the following constraint conditions: in response to that the shadow space distance is consistent with the attenuation start distance, a result of performing linear transformation on the depth-related value of the pixel by using the linear transformation rendering parameter is a first preset value; the attenuation start distance is a distance between a start position of shadow attenuation and the shadow camera in the shadow camera space; in response to that the shadow space distance is consistent with the attenuation end distance, a result of performing linear transformation on the depth-related value of the pixel by using the linear transformation rendering parameter is a second preset value; the attenuation end distance is a distance between an end position of shadow attenuation and the shadow camera in the shadow camera space; and the first preset value is less than the second preset value.

The first preset value is less than the second preset value. The first preset value is, for example, a numerical value around 0, and may be, for example, 0 or 0.1. The second preset value is, for example, a numerical value around 1, and may be, for example, 1 or 0.9. The constraint conditions include: 1, in response to that the shadow space distance is consistent with the attenuation start distance, the result of performing linear transformation on the depth-related value of the pixel by using the linear transformation rendering parameter is the first preset value; and 2, in response to that the shadow space distance is consistent with the attenuation end distance, the result of performing linear transformation on the depth-related value of the pixel by using the linear transformation rendering parameter is the second preset value. For example, x1 represents the attenuation start distance, x2 represents the attenuation length, x3 represents the attenuation end distance, and x3 = x1 + x2. If the first preset value is 0, and the second preset value is 1, the constraint condition is: fac = 0 when x = x1, and fac = 1 when x = x3.

Therefore, the result obtained by performing linear transformation on the depth-related value is greater than or equal to the first preset value and less than or equal to the second preset value. In response to that the linear transformation rendering parameter satisfies the constraint condition, the shadow may be caused to attenuate from the attenuation start distance, and disappear at the attenuation end distance, allowing the shadow to present a soft shadow effect. The first transformation parameter and the second transformation parameter are determined according to a preset condition. The preset condition includes at least two of the attenuation start distance, the attenuation length, or the attenuation end distance.

In some embodiments, the terminal may determine the linear transformation rendering parameter satisfying the constraint condition, and perform linear transformation on the depth-related value of the pixel by using the linear transformation rendering parameter satisfying the constraint condition, to obtain the shadow attenuation factor of the pixel, causing the shadow rendered by using the shadow attenuation factor to achieve a soft shadow effect.

In some embodiments, the linear transformation rendering parameter includes a first transformation parameter and a second transformation parameter. The terminal may calculate the first transformation parameter and the second transformation parameter satisfying the constraint condition according to the constraint condition, and perform linear transformation on the depth-related value of the pixel by using the first transformation parameter and the second transformation parameter that satisfy the constraint condition, to obtain the shadow attenuation factor of the pixel. For example, the terminal may calculate the shadow attenuation factor by using a formula: fac = t1 * D (x) + t2, where fac represents the shadow attenuation factor, t1 is the first transformation parameter, t2 is the second transformation parameter, and D(x) represents a function for calculating the depth-related value. For example, in response to of orthogonal projection, D(x) is a calculation formula for the depth value, and in response to of perspective projection, D(x) is a calculation formula for the depth value without the perspective division. The first transformation parameter and the second transformation parameter satisfy the constraint condition.

In some embodiments, the first preset value is 0, the second preset value is 1, and in response to of

$$D(x) = \frac{f(x-n)}{f-n}$$ , the first transformation parameter and the second transformation parameter satisfying the constraint condition are respectively:

$$t1 = \frac{f-n}{x3*f - x1*f} = \frac{f-n}{x2*f} \qquad \text{and}$$

$$t2 = \frac{n - x1}{x3 - x1} = \frac{n - x1}{x2}$$ ; in response to of

$$D(x) = \frac{x - n}{f - n}$$ , the first transformation parameter and the second transformation parameter satisfying the constraint condition are respectively:

$$t1 = \frac{f - n}{x3 - x1} = \frac{f - n}{x2}$$ and

$$t2 = \frac{n - x1}{x3 - x1} = \frac{n - x1}{x2}$$ ; in response to of

$$D(x) = \frac{(f - x)n}{f - n}$$ , the first transformation parameter and the second transformation parameter satisfying the constraint condition are respectively:

$$t1 = \frac{n - f}{x3 * n - x1 * n} = \frac{n - f}{x2 * n}$$ and

$$t2 = \frac{f - x1}{x3 - x1} = \frac{f - x1}{x2}$$ ; in response to of

$$D(x) = \frac{f - x}{f - n}$$ , the first transformation parameter and the second transformation parameter satisfying the constraint condition are respectively:

$$t1 = \frac{f - n}{x1 - x3} = \frac{n - f}{x2}$$ and

$$t2 = \frac{f - x1}{x3 - x1} = \frac{f - x1}{x2}$$ .

In this embodiment, in response to that the shadow space distance is consistent with the attenuation start distance, the result of linear transformation is the first preset value, and in response to that the shadow space distance is consistent with the attenuation end distance, the result of linear transformation is the second preset value, and the first preset value is less than the second preset value. Therefore, in a process in which the shadow space distance is changed from the attenuation start distance to the attenuation end distance, namely, in a process in which the shadow space distance gradually increases, the result of linear transformation increases gradually from the first preset value to the second preset value. To be specific, the shadow attenuation factor increases gradually from the first preset value to the second preset value. To be specific, the shadow attenuation factor increases as the shadow space distance increases, which conforms to a real phenomenon of the soft shadow.

In some embodiments, the operation of determining a depth-related value of the pixel based on the shadow space distance of the pixel under the light source includes: in response to that the shadow camera is an orthogonal projection camera, a pixel depth value is determined based on the shadow space distance of the pixel under the light source; and the pixel depth value is determined as the depth-related value of the pixel.

In some embodiments, the shadow camera is the orthogonal projection camera, which means that a projection manner of the shadow camera is the orthogonal projection. In response to of the orthogonal projection, because the pixel depth value is linear with the shadow space distance, the terminal may determine the pixel depth value as the depth-related value of the pixel.

In some embodiments, the pixel depth value is determined as the depth-related value of the pixel, so that the depth-related value is obtained conveniently and quickly.

In some embodiments, the method further includes: in response to that the shadow camera is a perspective projection camera, a depth-related value of the pixel is determined based on the shadow space distance of the pixel under the light source, where the pixel depth value is a ratio of the depth-related value of the pixel to a shadow space position.

In some embodiments, because the pixel depth value is a ratio of the depth-related value of the pixel to a shadow space position, the depth-related value of the pixel is a pixel depth value without perspective division. In response to that the projection type is the perspective projection, the pixel depth value is linear with the shadow space position, and the pixel depth value without the perspective division is linear with the shadow space position, so that the depth-related value of the pixel is linear with the shadow space position. For example, in response to that the depth calculation method is the forward depth calculation method, the pixel depth value is $d = \frac{f(x - n)}{(f - n)x}$ ; and the pixel depth value without the perspective division is $d1 = \frac{f(x - n)}{(f - n)}$ . Apparently, the pixel depth value without the perspective division is linear with x.

In some embodiments, because the pixel depth value is a ratio of the depth-related value of the pixel to a shadow space position, the depth-related value that is linear with the shadow space distance is obtained.

In some embodiments, the operation of performing linear transformation on a depth-related value of the pixel based on a linear transformation rendering parameter of the light source, to obtain a shadow attenuation factor of the pixel includes: linear transformation is performed on the depth-related value of the pixel based on the linear transformation rendering parameter of the light source, to obtain a linear transformation value; and a shadow attenuation factor of the pixel is determined based on the linear transformation value and an attenuation factor threshold.

The attenuation factor threshold includes at least one of a first attenuation factor threshold and a second attenuation factor threshold, and the first attenuation factor threshold is less than the second attenuation factor threshold. For example, the first attenuation factor threshold is a numerical value around 0, for example, may be 0 or 0.1. The second attenuation factor threshold is a numerical value around 1, for example, may be 1 or 0.9.

In some embodiments, the terminal may perform linear transformation on the depth-related value of the pixel based on the linear transformation rendering parameter of the light source, to obtain the linear transformation value. In response to that the linear transformation value is less than the first attenuation factor threshold, the terminal may take the first attenuation factor threshold as the shadow attenuation factor of the pixel. In response to that the linear transformation value is greater than the second attenuation factor threshold, the terminal may take the second attenuation factor threshold as the shadow attenuation factor of the pixel. In response to that the linear transformation value is greater than or equal to the first attenuation factor threshold, and the linear transformation value is less than or equal to the second attenuation factor threshold, the terminal may take the linear transformation value as the shadow attenuation factor of the pixel.

An example in which the first attenuation factor threshold is 0, and the second attenuation factor threshold is 1 is used. The shadow attenuation factor may be calculated through a formula: factor = saturate (posL.z * t1+t2). In response to that a calculation result of posL.z * t1+t2 is less than 0, the result of a saturate function is 0, so that the shadow attenuation factor is equal to 0. In response to that the calculation result of posL.z * t1+t2 is greater than 1, the result of the saturate function is 1, so that the shadow attenuation factor is equal to 1. In response to that the calculation result of posL.z * t1+t2 is greater than or equal to 0 and less than or equal to 1, the result of the saturate function is the calculation result of posL.z * t1+t2, so that the shadow attenuation factor is equal to posL.z * t1+t2. posL.z represents the depth-related value, and t1 and t2 are two linear transformation rendering parameters.

In some embodiments, the shadow attenuation factor of the pixel is determined based on the linear transformation value and the attenuation factor threshold, to limit a value range of the shadow attenuation factor, enabling the shadow attenuation factor to be more proper.

In some embodiments, the operation of determining a shadow space distance of a pixel in a screen space under a light source includes: a world space position of the pixel is converted into a position in the shadow camera space, to obtain a shadow space position corresponding to the world space position; and a distance between the shadow space position corresponding to the world space position and the shadow space position of the shadow camera in an observation direction of the shadow camera is determined, to obtain the shadow space distance of the pixel under the light source.

The observation direction of the shadow camera is an orientation of the shadow camera. The shadow space position of the shadow camera is a position of the shadow camera in the shadow camera space. The shadow camera space may be identified by using a three-dimensional coordinate system, and a direction of one coordinate axis in the three-dimensional coordinate system is the orientation of the shadow camera. For example, the direction of a Z axis in the three-dimensional coordinate system is the orientation of the shadow camera, so that the observation direction of the shadow camera is the direction of the Z axis in the three-dimensional coordinate system.

In some embodiments, for a pixel in the screen space, the terminal may determine a coordinate of the shadow space position corresponding to the world space position in the observation direction of the shadow camera, such as a coordinate in the direction of the Z axis in the three-dimensional coordinate system of the shadow camera space, to obtain a first coordinate. Similarly, the terminal may determine a coordinate of the shadow space position of the shadow camera in the observation direction of the shadow camera, to obtain a second coordinate, and calculate a difference between the first coordinate and the second coordinate. The difference is the shadow space distance of the pixel under the light source.

In some embodiments, the shadow space distance is a distance between the shadow space position corresponding to the world space position and the shadow space position of the shadow camera in the observation direction of the shadow camera, and the observation direction is consistent with an irradiation direction of the light source, so that the shadow space position reflects a distance to the light source. Because a shadow far away from the light source has relatively large attenuation, the shadow attenuation factor is determined by using the shadow space distance, and the properness of the shadow attenuation factor is improved.

In some embodiments, the operation of rendering a shadow of the pixel based on the shadow attenuation factor of the pixel, to obtain a shadow rendering result of the virtual scene at the observation view includes: a first shadow intensity of the pixel under the light source is determined, the first shadow intensity being a first preset intensity or a second preset intensity, and the first preset intensity representing that a light ray emitted from the light source to the world space position of the pixel is occluded, and the second preset intensity representing that the light ray emitted from the light source to the world space position of the pixel is not occluded; the first shadow intensity of the pixel is attenuated by using the shadow attenuation factor, to obtain a second shadow intensity of the pixel under the light source; and the shadow of the pixel is rendered based on the second shadow intensity, to obtain the shadow rendering result of the virtual scene at the observation view.

The shadow intensity is configured for reflecting a prominent degree of a shadow, and a higher shadow intensity indicates a more prominent shadow. The first shadow intensity is a first preset intensity or a second preset intensity. The first preset intensity represents that a light ray emitted from the light source to the world space position of the pixel is occluded. The second preset intensity represents that the light ray emitted from the light source to the world space position of the pixel is not occluded. The first preset intensity is greater than the second preset intensity. The first preset intensity is, for example, a numerical value around 1, and may be, for example, 1 or 0.9. The second preset intensity is, for example, a numerical value around 0, and may be, for example, 0 or 0.1. The second shadow intensity is in a negative correlation with the shadow attenuation factor, and the second shadow intensity is in a positive correlation with the first shadow intensity.

In some embodiments, the terminal may determine an intensity retention value according to the shadow attenuation factor. The intensity retention value is in a negative correlation with the shadow attenuation factor. For example, the intensity retention value = 1-shadow attenuation factor. The terminal may perform a multiplication operation on the intensity retention value and the first shadow intensity, and takes a result of the operation as the second shadow intensity. For example, the second shadow intensity: $intensity2 = (1-factor) * intensity1$. In the equation, $intensity1$ represents the first shadow intensity, $intensity2$ represents the second shadow intensity, and factor represents the shadow attenuation factor.

In some embodiments, the first shadow intensity of the pixel is attenuated by using the shadow attenuation factor, to obtain the second shadow intensity of the pixel under the light source, and the shadow of the pixel is rendered based on the second shadow intensity, so that the shadow rendering result is enabled to present a soft shadow effect, thereby improving the shadow rendering effect.

In some embodiments, the operation of determining a first shadow intensity of a pixel under a light source includes: the world space position of the pixel is converted into a position in the shadow camera space of the shadow camera, to obtain the shadow space position corresponding to the world space position; and the shadow space position corresponding to the world space position is converted into a position in the screen space, to obtain the screen space position corresponding to the world space position; and a first shadow intensity of the pixel under the light source is determined based on the pixel depth value and a minimum depth value at the screen space position, where the pixel depth value is a depth value of the world space position of the pixel in the shadow camera space.

The shadow space position corresponding to the world space position is a position obtained by converting the world space position from the world space to the shadow camera space. The screen space position represents a position of the pixel in the screen space. The minimum depth value at the screen space position is a minimum depth value at the screen space position in the screen space after a scene area observed by the shadow camera is projected to the screen space. A plurality of scene points in the scene area observed by the shadow camera may be projected to a same position in the screen space, so that the screen space position may correspond to a plurality of scene points. A depth value of the unoccluded scene point among the plurality of scene points in the shadow camera space is the minimum depth value at the screen space position. The scene point is a point on a virtual object in the virtual scene, and the virtual object may be an animate object or an inanimate object, for example, may be an animal, a building, or furniture. The world space position of the pixel may be further understood as points on the virtual object in the virtual scene.

In some embodiments, to determine the minimum depth value of the screen space position, for each of the plurality of scene points corresponding to the screen space, the terminal may determine a distance, in an observation direction of the shadow camera, between a position of the scene point in the shadow camera space and the shadow space position of the shadow camera, take the determined distance as the shadow space distance of the scene point under the light source, and determine the depth value of the scene point under the shadow camera space according to the shadow space distance of the scene point under the light source. After the depth value of each of the plurality of scene points is obtained, the terminal may determine the minimum depth value from various depth values, and take the minimum depth value as the minimum depth value at the screen space position. For a manner for determining the depth value according to the shadow space distance, refer to the foregoing method for determining the pixel depth value according to the shadow space distance. Details are not described herein again.

In some embodiments, the terminal may compare the pixel depth value with the minimum depth value at the screen space position, and determine the first shadow intensity of the pixel under the light source according to a comparison result.

In some embodiments, because a relationship between the depth values may reflect an occlusion relationship, the first shadow intensity is determined by comparing the depth values, enabling the first shadow intensity to reflect accurately the occlusion relationship, thereby improving the accuracy of the first shadow intensity.

In some embodiments, the operation of obtaining the minimum depth value at the screen space position includes: a shadow chartlet of the light source is determined; the shadow chartlet includes the minimum depth value at each screen space position in the screen space after the scene area observed by the shadow camera is projected to the screen space; and the minimum depth value at the screen space position corresponding to the world space position is obtained from the shadow chartlet.

In some embodiments, the shadow chartlet includes the minimum depth value at each screen space position in the screen space after the scene area observed by the shadow camera is projected to the screen space. The shadow chartlet may be pre-generated. When shadow rendering is performed by using the light source, the minimum depth value at the screen space position may be obtained from the shadow chartlet of the light source.

In some embodiments, the minimum depth value at the screen space position may be quickly obtained by using the shadow chartlet, thereby improving the rendering efficiency.

In some embodiments, the operation of determining a first shadow intensity of the pixel under the light source based on the pixel depth value and the minimum depth value at the screen space position includes: it is determined that the first shadow intensity of the pixel under the light source is a first preset intensity in response to that the pixel depth value is greater than the minimum depth value at the screen space position; and it is determined that the first shadow intensity of the pixel under the light source is the second preset intensity in response to that the pixel depth value is less than or equal to the minimum depth value at the screen space position.

The first preset intensity represents that a light ray emitted from the light source to the world space position of the pixel is occluded. The second preset intensity represents that the light ray emitted from the light source to the world space position of the pixel is not occluded. The first preset intensity is greater than the second preset intensity. The first preset intensity is, for example, a numerical value around 1, and may be, for example, 1 or 0.9. The second preset intensity is, for example, a numerical value around 0, and may be, for example, 0 or 0.1. The second shadow intensity is in a negative correlation with the shadow attenuation factor, and the second shadow intensity is in a positive correlation with the first shadow intensity.

In some embodiments, in response to that the pixel depth value is greater than the minimum depth value at the screen space position, the light ray emitted from the light source to the world space position of the pixel is occluded. Therefore, in response to that the pixel depth value is greater than the minimum depth value at the screen space position, the terminal may determine that the first shadow intensity of the pixel under the light source is the first preset intensity. In response to that the pixel depth value is less than or equal to the minimum depth value at the screen space position, the light ray emitted from the light source to the world space position of the pixel is not occluded. Therefore, in response to that the pixel depth value is less than or equal to the minimum depth value at the screen space position, the terminal may determine that the first shadow intensity of the pixel under the light source is the second preset intensity.

In some embodiments, the value of the first shadow intensity is determined accurately by using that the pixel depth value is greater than the minimum depth value at the screen space position.

In some embodiments, the operation of rendering a shadow of the pixel based on the second shadow intensity, to obtain a shadow rendering result of the virtual scene at the observation view includes: a first color value of the pixel is determined, the first color value being a color value of the pixel without a shadow, and a second color value of the pixel being determined based on the second shadow intensity and the first color value; and rendering is performed by using the second color value of the pixel, to obtain the shadow rendering result of the virtual scene at the observation view.

The first color value of the pixel is a color value of the pixel without a shadow, namely, the color value of the pixel without considering occlusion, i.e. a color value of the pixel in response to that it is assumed that the light source can irradiate to the world space position of the pixel.

In some embodiments, the second color value is in a negative correlation with the second shadow intensity. The first terminal may determine a color retention coefficient according to the second shadow intensity, where the color retention coefficient is in a negative correlation with the second shadow intensity, and a product of the color retention coefficient and the second color value is used as the second color value. The color retention coefficient is a numerical value between 0 and 1. For example, the color retention coefficient=1-second shadow intensity, and the second color value=first color value $\times$ (1-second shadow intensity).

In some embodiments, the terminal determines a world space position of each pixel in a screen space after a target scene area is projected to the screen space. The target scene area is a scene area observed when the virtual scene is observed at an observation view. For each pixel, the terminal may obtain a shadow attenuation factor of the pixel according to the world space position of the pixel by using the method for determining the shadow attenuation factor provided in this application. In response to that the shadow attenuation factor of each pixel is obtained, a second color value of each pixel is obtained, and rendering is performed by using the second color value of each pixel, to obtain a shadow rendering result of the virtual scene at the observation view, where the shadow rendering result includes a shadow generated by the light source and presents a soft shadow effect. In response to that there are a plurality of light sources, rendering may be performed sequentially by using each light source, to obtain the shadow rendering result, so that the shadow rendering result includes a soft shadow generated by each light source.

In some embodiments, the second color value of the pixel is determined based on the second shadow intensity and the first color value, and rendering is performed by using the second color value of the pixel to obtain the shadow rendering result of the virtual scene at the observation view, so that the shadow in the shadow rendering result presents a soft shadow effect, thereby improving the shadow rendering effect.

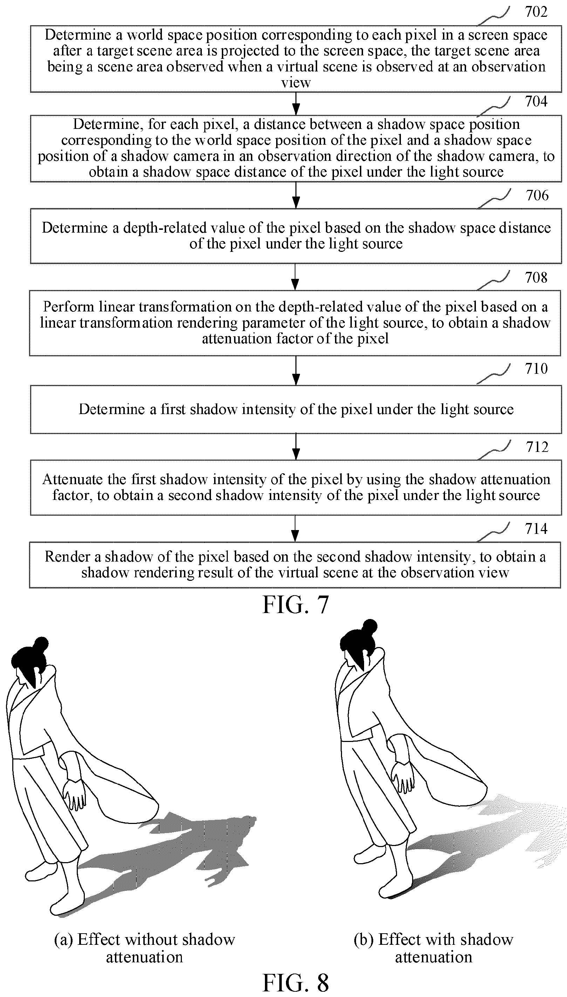

In some embodiments, as shown in FIG. 7, a shadow rendering method is provided. The method may be performed by a terminal, or may be jointly performed by the terminal and a server. An example in which the method is applied to the terminal is used for description.

In some embodiments, the method may include operation 702: Determine a world space position corresponding to each pixel in a screen space after a target scene area is projected to the screen space, the target scene area being a scene area observed when a virtual scene is observed at an observation view.

In some embodiments, the method may further include operation 704: Determine, for each pixel, a distance between a shadow space position corresponding to the world space position of the pixel and a shadow space position of a shadow camera in an observation direction of the shadow camera, to obtain a shadow space distance of the pixel under the light source.

The shadow camera is located at a position of the light source, and the virtual scene is observed from an irradiation direction of the light source. To be specific, an orientation of the shadow camera is consistent with the irradiation direction of the light source.

In some embodiments, the method may further include operation 706: Determine a depth-related value of the pixel based on the shadow space distance of the pixel under the light source.

The depth-related value is linear with the shadow space distance, the depth-related value is related to a pixel depth value, and the pixel depth value is a depth value of the world space position of the pixel in the shadow camera space.

In some embodiments, the method may further include operation 708: Perform linear transformation on the depth-related value of the pixel based on a linear transformation rendering parameter of the light source, to obtain a shadow attenuation factor of the pixel.

The linear transformation rendering parameter satisfies the following constraint conditions: in response to that the shadow space distance is consistent with an attenuation start distance, a result of performing linear transformation on the depth-related value of the pixel by using the linear transformation rendering parameter is a first preset value. The attenuation start distance is a distance between a start position of shadow attenuation and the shadow camera in the shadow camera space; in response to that the shadow space distance is consistent with the attenuation end distance, a result of performing linear transformation on the depth-related value of the pixel by using the linear transformation rendering parameter is a second preset value; the attenuation end distance is a distance between an end position of shadow attenuation and the shadow camera in the shadow camera space; and the first preset value is less than the second preset value.

In some embodiments, the method may further include operation 710: Determine a first shadow intensity of the pixel under the light source.

The first shadow intensity is a first preset intensity or a second preset intensity. The first preset intensity represents that a light ray emitted from the light source to the world space position of the pixel is occluded. The second preset intensity represents that the light ray emitted from the light source to the world space position of the pixel is not occluded.

In some embodiments, the method may further include operation 712: Attenuate the first shadow intensity of the pixel by using the shadow attenuation factor, to obtain a second shadow intensity of the pixel under the light source.

In some embodiments, the method may further include operation 714: Render a shadow of the pixel based on the second shadow intensity, to obtain a shadow rendering result of the virtual scene at the observation view.

In this embodiment, the linear transformation is performed on the shadow space distance of the pixel under the light source by using the linear transformation rendering parameter determined through the attenuation start distance, the attenuation end distance, or the attenuation length, to obtain the shadow attenuation factor of the pixel, thereby implementing a method for controlling the shadow attenuation factor by using the parameter (the attenuation start distance, the attenuation end distance, or the attenuation length). The manner for controlling the shadow attenuation factor is simple and efficient, has low calculation complexity, and improves the soft shadow rendering efficiency. FIG. 8 is a diagram showing effects with shadow attenuation and without shadow attenuation.

A shadow rendering method provided in this application may be applied to any scene requiring shadow rendering, including but not limited to scenes of a movie and television special effect, a game, sight glass simulation, visual design, virtual reality (VR), industrial simulation, and digital culture and creation. The shadow rendering method of this application may improve the shadow rendering efficiency in the scenes of movie and television special effects, visual design, games, sight glass simulation, VR, industrial simulation, and digital culture and creation.

For a game scene, in response to that there is a shadow in the game scene, the terminal may determine a world space position corresponding to each pixel in a screen space after an observed game scene area is projected to the screen space, determine a shadow space distance of the pixel in the screen space under a light source, perform linear transformation on the shadow space distance of the pixel under the light source based on a linear transformation rendering parameter of the light source, to obtain a shadow attenuation factor of the pixel, and render a shadow of the pixel based on the shadow attenuation factor of the pixel, to obtain a shadow rendering result of the game scene. Therefore, the rendering efficiency is improved while the soft shadow is rendered.

For an industrial simulation scene, to render a shadow generated when a simulation object is irradiated by light, the terminal may determine a world space position corresponding to each pixel in a screen space after an observed industrial simulation scene area is projected to the screen space, determine a shadow space distance of the pixel in the screen space under a light source, perform linear transformation on the shadow space distance of the pixel under the light source based on a linear transformation rendering parameter of the light source, to obtain a shadow attenuation factor of the pixel, and render a shadow of the pixel based on the shadow attenuation factor of the pixel, to obtain a shadow rendering result of the industrial simulation scene.. Therefore, the rendering efficiency is improved while the soft shadow is rendered.

Although the operations are displayed sequentially according to instructions of arrows in the flowcharts involved in various foregoing embodiments, these operations are not necessarily performed sequentially according to the sequence instructed by the arrows. Unless explicitly stated in the description, the execution of these operations is not strictly limited in sequence, and these operations may be executed in other sequences. Moreover, at least some of the operations in the flowcharts involved in various foregoing embodiments may include a plurality of operations or a plurality of stages. The operations or stages are not necessarily performed at the same moment but may be performed at different moments. The operations or stages are not necessarily sequentially performed, but may be performed alternately with other operations or at least some operations or stages of other operations.

Based on a same inventive concept, an embodiment of this application further provides a shadow rendering apparatus, configured to implement the foregoing shadow rendering method. An implementation solution provided by the apparatus for resolving problems is similar to the implementation solution recorded in the foregoing method. Therefore, for specific limitations on one or more shadow rendering apparatuses provided below, refer to the limitations on the foregoing shadow rendering method. Details are not described herein again.

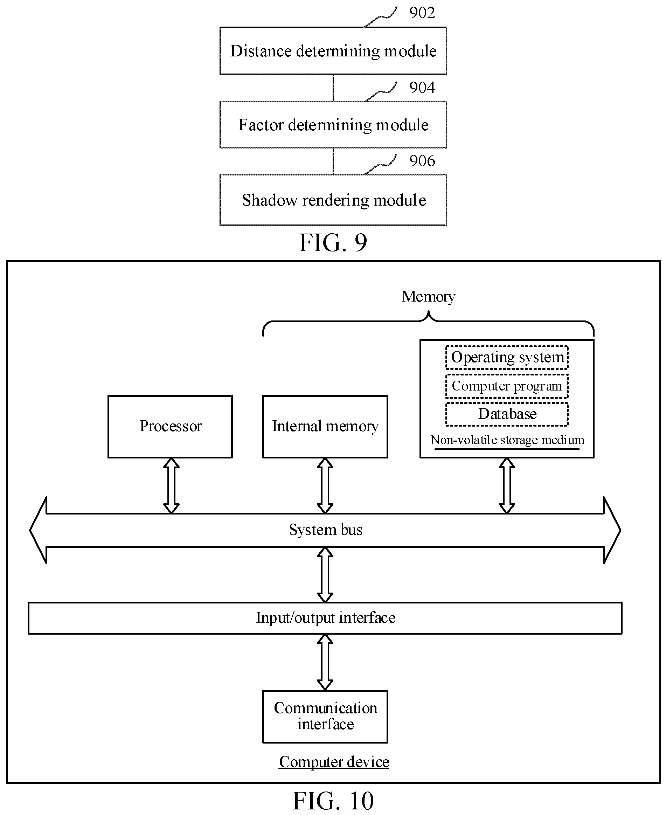

In some embodiments, as shown in FIG. 9, a shadow rendering apparatus is provided, including: a factor determining module 904, and a shadow rendering module 906.

The factor determining module 904 is configured to perform linear transformation on a shadow space distance of a pixel under a light source of a virtual scene, to obtain a shadow attenuation factor of the pixel, the shadow space distance being a distance between a world space position of the pixel and a shadow camera located at a position of the light source in a shadow camera space.

The shadow rendering module 906 is configured to render a shadow of the pixel based on the shadow attenuation factor.

In some embodiments, the apparatus further includes a distance determining module 902, configured to determine the shadow space distance of the pixel in a screen space under the light source of the virtual scene at an observation view of the virtual scene.

In some embodiments, the factor determining module 904 is further configured to determine a depth-related value of the pixel based on the shadow space distance of the pixel under the light source, where the depth-related value is linear with the shadow space distance, the depth-related value is related to a pixel depth value, and the pixel depth value is a depth value of the world space position of the pixel in the shadow camera space; and perform linear transformation on the depth-related value of the pixel based on the linear transformation rendering parameter of the light source, to obtain the shadow attenuation factor of the pixel.

In some embodiments, the preset condition includes at least two of an attenuation start distance, an attenuation length, or an attenuation end distance. The attenuation length is a difference between the attenuation start distance and the attenuation end distance. The linear transformation rendering parameter satisfies the following constraint conditions: in response to that the shadow space distance is consistent with the attenuation start distance, a result of performing linear transformation on the depth-related value of the pixel by using the linear transformation rendering parameter is a first preset value; the attenuation start distance is a distance between a start position of shadow attenuation and the shadow camera in the shadow camera space; in response to that the shadow space distance is consistent with the attenuation end distance, a result of performing linear transformation on the depth-related value of the pixel by using the linear transformation rendering parameter is a second preset value; the attenuation end distance is a distance between an end position of shadow attenuation and the shadow camera in the shadow camera space; and the first preset value is less than the second preset value.

In some embodiments, the factor determining module 904 is further configured to determine the pixel depth value based on the shadow space distance of the pixel under the light source in response to that the shadow camera is an orthogonal projection camera; and determine the pixel depth value as the depth-related value of the pixel.

In some embodiments, the factor determining module 904 is further configured to determine the depth-related value of the pixel based on the shadow space distance of the pixel under the light source in response to that the shadow camera is a perspective projection camera, where the pixel depth value is a ratio of the depth-related value of the pixel to a shadow space position.

In some embodiments, the factor determining module 904 is further configured to perform linear transformation on the depth-related value of the pixel based on the linear transformation rendering parameter of the light source, to obtain a linear transformation value; and determine a shadow attenuation factor of the pixel based on the linear transformation value and an attenuation factor threshold.

In some embodiments, the distance determining module 902 is further configured to convert the world space position of the pixel into a position in the shadow camera space, to obtain a shadow space position corresponding to the world space position; and determine a distance between the shadow space position corresponding to the world space position and the shadow space position of the shadow camera in an observation direction of the shadow camera, to obtain the shadow space distance of the pixel under the light source.

In some embodiments, the shadow rendering module 906 is further configured to determine a first shadow intensity of the pixel under the light source, the first shadow intensity being a first preset intensity or a second preset intensity, the first preset intensity representing that a light ray emitted from the light source to the world space position of the pixel is occluded, and the second preset intensity representing that the light ray emitted from the light source to the world space position of the pixel is not occluded; attenuate the first shadow intensity of the pixel by using the shadow attenuation factor, to obtain a second shadow intensity of the pixel under the light source; and render a shadow of the pixel based on the second shadow intensity, to obtain the shadow rendering result of the virtual scene at the observation view.

In some embodiments, the shadow rendering module 906 is further configured to convert the world space position of the pixel into a position in the shadow camera space of the shadow camera, to obtain a shadow space position corresponding to the world space position; convert the shadow space position corresponding to the world space position into a position in the screen space, to obtain the screen space position corresponding to the world space position; and determine a first shadow intensity of the pixel under the light source based on the pixel depth value and a minimum depth value at the screen space position, the pixel depth value being a depth value of the world space position of the pixel in the shadow camera space.

In some embodiments, the apparatus further includes a depth value obtaining module. The depth value obtaining module is configured to determine a shadow chartlet of the light source; and the shadow chartlet includes the minimum depth value at each screen space position in the screen space after the scene area observed by the shadow camera is projected to the screen space; and the minimum depth value at the screen space position corresponding to the world space position is obtained from the shadow chartlet.

In some embodiments, the shadow rendering module 906 is further configured to determine that the first shadow intensity of the pixel under the light source is a first preset intensity in response to that the pixel depth value is greater than the minimum depth value at the screen space position; and determine that the first shadow intensity of the pixel under the light source is the second preset intensity in response to that the pixel depth value is less than or equal to the minimum depth value at the screen space position.

In some embodiments, the shadow rendering module 906 is further configured to determine a first color value of the pixel, the first color value being a color value of the pixel without a shadow, and a second color value of the pixel being determined based on the second shadow intensity and the first color value; and perform rendering by using the second color value of the pixel, to obtain the shadow rendering result of the virtual scene at the observation view.

Various modules in the foregoing shadow rendering apparatus may be implemented entirely or partially by using software, hardware, or a combination thereof. The foregoing modules may be embedded to or may be independent from a processor in a computer device in a hardware form, or may be stored in a memory in the computer device in a software form, so as to be invoked by the processor to execute the operations corresponding to each module.

In some embodiments, a computer device is provided. The computer device may be a server. An internal structure thereof may be shown in FIG. 10. The computer device includes a processor, a memory, an input/output (I/O) interface, and a communication interface. The processor, the memory, and the input/output interface are connected through a system bus, and the communication interface is connected to the system bus through the input/output interface. The processor of the computer device is configured to provide computation and control ability. The memory of the computer device includes a non-volatile storage medium and an internal memory. The non-volatile storage medium stores an operating system, a computer program, and a database. The internal memory provides an operating environment for the operating system and the computer program in the non-volatile storage medium. The database of the computer device is configured to store data involved in the shadow rendering method. The input/output interface of the computer device is configured to exchange information between the processor and peripheral equipment. The communication interface of the computer device is configured to connect and communicate with an external terminal through a network. The computer program, when executed by the processor, implements a shadow rendering method.

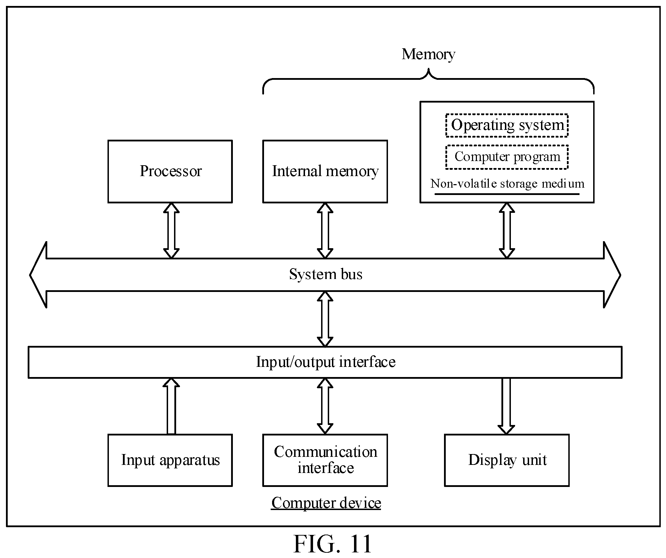

In some embodiments, a computer device is provided. The computer device may be a terminal, and an internal structure diagram thereof may be as shown in FIG. 11. The computer device includes a processor, a memory, an input/output interface, a communication interface, a display unit, and an input apparatus. The processor, the memory, and the input/output interface are connected by a system bus, and the communication interface, the display unit, and the input apparatus are connected to the system bus through the input/output interface. The processor of the computer device is configured to provide computation and control ability. The memory of the computer device includes a non-volatile storage medium and an internal memory. The non-volatile storage medium stores an operating system and a computer program. The internal memory provides an operating environment for the operating system and the computer program in the non-volatile storage medium. The input/output interface of the computer device is configured to exchange information between the processor and peripheral equipment. The communication interface of the computer device is configured to communicate with external terminals in a wired way or a wireless way, and the wireless way may be implemented by WIFI, mobile cellular networks, near-field communication (NFC) or other technologies. The computer program, when executed by the processor, implements a shadow rendering method. The display unit of the computer device is configured to form a visible picture, and may be a display screen, a projection apparatus, or a virtual reality imaging apparatus. The display screen may be a liquid crystal display screen or an e-ink display screen. The input apparatus of the computer device may be a touch layer covering the display screen, or may be a button, a trackball, or a touch pad disposed on a housing of the computer device, or may be an external keyboard, touch pad, mouse, or the like.

A person skilled in the art may understand that, structures shown in FIG. 10 and FIG. 11 are merely block diagrams of a partial structure related to a solution in this application, and do not constitute a limitation to the computer device to which the solution in the application is applied. Specifically, the computer device may include more components or fewer components than those shown in the figure, or some components may be combined, or a different component deployment may be used.

In some embodiments, a computer device is further provided, including: a memory and a processor, the memory having a computer program stored therein, and the processor, when executing the computer program, implementing operations of the foregoing shadow rendering method.

In some embodiments, a computer-readable storage medium is provided, having a computer program stored therein, the computer program, when executed by a processor, implementing operations of the foregoing shadow rendering method.

In some embodiments, a computer program product is provided, including a computer program, the computer program, when executed by a processor, implementing operations of the foregoing shadow rendering method

In addition, the user information (including but not limited to information of user equipment, personal information of the user), and data (including but not limited to to-be-analyzed data, stored data, and to-be-displayed data) involved in this application are all authorized by the user or fully authorized by all parties, and the collection, use and processing of relevant data need to comply with relevant laws, regulations and standards of relevant countries and regions.

Those ordinary skilled in the art may understand that implementing all or part of the process in the method of the above-mentioned embodiments may be completed by instructing related hardware through computer programs. The above-mentioned programs may be stored in a non-volatile computer-readable storage medium, and when executed, the computer programs may include the process of the embodiments of the above-mentioned method. Any reference to a memory, a database, or another medium used in the embodiments provided in this application may include at least one of a non-volatile and volatile memory. The non-volatile memory may include a read-only memory (ROM), a magnetic tape, a floppy disk, a flash memory, an optical memory, a high-density embedded non-volatile memory, a resistive random access memory (ReRAM), a magneto-resistive random access memory (MRAM), a ferroelectric random access memory (FRAM), a phase change memory (PCM), a graphene memory, or the like. The volatile memory may be a random access memory (RAM) or an external cache. As illustration rather than limitation, the RAM may be in various forms, such as a static random access memory (SRAM), and a dynamic random access memory (DRAM). The database involved in the embodiments provided in this application may include at least one of a relational database and a non-relational database. The non-relational database may include a blockchain-based distributed database, or the like, but is not limited thereto. The processor involved in the embodiments provided in this application may be a general-purpose processor, a central processing unit, a graphics processing unit, a digital signal processor, a programmable logic device, a quantum computing-based data processing logic device, or the like, but is not limited thereto.

Technical features of foregoing embodiments may be combined in different manners to form other embodiments. For ease of description, not all possible combinations of the technical features in embodiments are described. However, as long as there is no contradiction in the combinations of these technical features, it is to be considered to be within the scope of this application.

The foregoing embodiments only describe several implementations of this application, and the descriptions are specific and detailed, but is not to be construed as limitations to the patent scope of this disclosure. A person of ordinary skill in the art can further make several improvements and refinements without departing from the concept of this application, and the modifications and improvements shall fall within the protection scope of this application. Therefore, the protection scope of this application shall be subject to the attached claims.

**Claims**

1. A shadow rendering method, the method comprising:

    performing linear transformation on a shadow space distance of a pixel under a light source of a virtual scene, to obtain a shadow attenuation factor of the pixel, the shadow space distance being a distance between a world space position of the pixel and a shadow camera located at a position of the light source in a shadow camera space; and
    rendering a shadow of the pixel based on the shadow attenuation factor.

2. The method according to claim 1, wherein the rendering a shadow of the pixel based on the shadow attenuation factor comprises:

    determining a first shadow intensity of the pixel under the light source;
    attenuating the first shadow intensity of the pixel by using the shadow attenuation factor, to obtain a second shadow intensity of the pixel under the light source; and
    rendering the shadow of the pixel based on the second shadow intensity of the pixel.

3. The method according to claim 1 or 2, wherein the performing linear transformation on a shadow space distance of a pixel under a light source of a virtual scene, to obtain a shadow attenuation factor of the pixel comprises:

    determining a depth-related value of the pixel based on the shadow space distance; and
    performing linear transformation on the depth-related value of the pixel based on a linear transformation rendering parameter of the light source, to obtain the shadow attenuation factor of the pixel.

4. The method according to claim 3, wherein the linear transformation rendering parameter is determined according to a preset condition set for the light source, the preset condition comprises at least two of an attenuation start distance, an attenuation length, or an attenuation end distance, the attenuation length is a difference between the attenuation start distance and the attenuation end distance, and the linear transformation rendering parameter satisfies following constraint conditions:

    in response to that the shadow space distance is consistent with the attenuation start distance, a result of performing linear transformation on the depth-related value of the pixel by using the linear transformation rendering parameter is a first preset value, and the attenuation start distance is a distance between a start position of shadow attenuation and the shadow camera in the shadow camera space; and
    in response to that the shadow space distance is consistent with the attenuation end distance, a result of performing linear transformation on the depth-related value of the pixel by using the linear transformation rendering parameter is a second preset value, the attenuation end distance is a distance between an end position of shadow attenuation in the shadow camera space and the shadow camera, and the first preset value is less than the second preset value.

5. The method according to claim 3 or 4, wherein the determining a depth-related value of the pixel based on the shadow space distance comprises:

    determining a pixel depth value of the world space position of the pixel in the shadow camera space based on the shadow space distance, in response to that the shadow camera is an orthogonal projection camera; and
    determining the pixel depth value as the depth-related value of the pixel.

6. The method according to any one of claims 3 to 5, wherein in response to that the shadow camera is a perspective projection camera, the pixel depth value is a ratio of the depth-related value of the pixel to a shadow space position of the pixel in the shadow camera space.

7. The method according to any one of claims 3 to 6, wherein the performing linear transformation on the depth-related value of the pixel based on a linear transformation rendering parameter of the light source, to obtain the shadow attenuation factor of the pixel comprises:

performing linear transformation on the depth-related value of the pixel based on the linear transformation rendering parameter of the light source, to obtain a linear transformation value; and

determining the shadow attenuation factor of the pixel based on the linear transformation value and an attenuation factor threshold.

8. The method according to any one of claims 1 to 7, wherein the shadow space distance is determined by:

converting the world space position of the pixel into a position in the shadow camera space, to obtain a shadow space position corresponding to the world space position; and

determining, in an observation direction of the shadow camera, a distance between the shadow space position corresponding to the world space position and the shadow space position of the shadow camera, to obtain the shadow space distance of the pixel under the light source of the virtual scene.

9. The method according to any one of claims 2 to 8, wherein the determining a first shadow intensity of the pixel under the light source comprises:

converting the world space position of the pixel into a position in the shadow camera space of the shadow camera, to obtain a shadow space position corresponding to the world space position; and

converting the shadow space position corresponding to the world space position into a position in a screen space, to obtain a screen space position corresponding to the world space position; and

determining the first shadow intensity of the pixel under the light source based on a pixel depth value and a minimum depth value at the screen space position, the pixel depth value being a depth value of the world space position of the pixel in the shadow camera space.

10. The method according to claim 9, wherein the determining the first shadow intensity of the pixel under the light source based on a pixel depth value and a minimum depth value at the screen space position comprises:

determining that the first shadow intensity of the pixel under the light source is a first preset intensity in response to that the pixel depth value is greater than the minimum depth value at the screen space position; and

determining that the first shadow intensity of the pixel under the light source is a second preset intensity in response to that the pixel depth value is less than or equal to the minimum depth value at the screen space position.

11. The method according to any one of claims 2 to 10, wherein the rendering a shadow of the pixel based on the second shadow intensity comprises:

determining a first color value of the pixel, the first color value being a color value of the pixel without a shadow;

determining a second color value of the pixel based on the second shadow intensity and the first color value; and

performing rendering by using the second color value of the pixel, to obtain a shadow rendering result of the virtual scene under an observation view of the virtual scene.

12. A shadow rendering apparatus, comprising:

a factor determining module, configured to perform linear transformation on a shadow space distance of a pixel under a light source of a virtual scene, to obtain a shadow attenuation factor of the pixel, the shadow space distance being a distance between a world space position of the pixel and a shadow camera located at a position of the light source in a shadow camera space; and

a shadow rendering module, configured to render a shadow of the pixel based on the shadow attenuation factor.

13. A computer device, comprising a memory and a processor, the memory having a computer program stored therein, and the processor executing the computer program to perform operations of the method according to any one of claims 1 to 11.

14. A computer-readable storage medium, having a computer program stored therein, the computer program being executed by a processor to perform operations of the method according to any one of claims 1 to 11.

15. A computer program product, comprising a computer program, the computer program being executed by a processor to perform operations of the method according to any one of claims 1 **to 11.**

FIG. 1

202

Determine a shadow space distance of a pixel in a screen space under a light source of a virtual scene at an observation view of the virtual scene, the shadow space distance being a distance between a world space position of the pixel and a shadow camera located at a position of the light source in a shadow camera space

204

Perform linear transformation on the shadow space distance of the pixel under the light source based on a linear transformation rendering parameter of the light source, to obtain a shadow attenuation factor of the pixel, the linear transformation rendering parameter being determined according to a preset attenuation parameter set for the light source

206

Render a shadow of the pixel based on the shadow attenuation factor of the pixel, to obtain a shadow rendering result of the virtual scene at the observation view

FIG. 2

(a) Effect without shadow
attenuation

(b) x1=0.5, x2=1

(c) x1=1, x2=0.5

(d) x1=0.7, x2=1.2

FIG. 3

FIG. 4

FIG. 5

FIG. 6

702

Determine a world space position corresponding to each pixel in a screen space after a target scene area is projected to the screen space, the target scene area being a scene area observed when a virtual scene is observed at an observation view

704

Determine, for each pixel, a distance between a shadow space position corresponding to the world space position of the pixel and a shadow space position of a shadow camera in an observation direction of the shadow camera, to obtain a shadow space distance of the pixel under the light source

706

Determine a depth-related value of the pixel based on the shadow space distance of the pixel under the light source

708

Perform linear transformation on the depth-related value of the pixel based on a linear transformation rendering parameter of the light source, to obtain a shadow attenuation factor of the pixel

710

Determine a first shadow intensity of the pixel under the light source

712

Attenuate the first shadow intensity of the pixel by using the shadow attenuation factor, to obtain a second shadow intensity of the pixel under the light source

714

Render a shadow of the pixel based on the second shadow intensity, to obtain a shadow rendering result of the virtual scene at the observation view

FIG. 7

(a) Effect without shadow attenuation

(b) Effect with shadow attenuation

FIG. 8

902

| Distance determining module |

904

| Factor determining module |

906

| Shadow rendering module |

FIG. 9

Memory

| Processor | | Internal memory | | Operating system |
| | | | | Computer program |
| | | | | Database |
| | | | | Non-volatile storage medium |

System bus

Input/output interface

Communication interface

Computer device

FIG. 10

FIG. 11

## INTERNATIONAL SEARCH REPORT

| International application No. |
| --- |
| **PCT/CN2024/076534** |

**A.    CLASSIFICATION OF SUBJECT MATTER**

G06T 15/60(2006.01)i;  G06T 15/50(2011.01)n

According to International Patent Classification (IPC) or to both national classification and IPC

**B.    FIELDS SEARCHED**

Minimum documentation searched (classification system followed by classification symbols)

IPC：G06T

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 软阴影, 区域, 距离, 深度, 衰减, 渲染, 遮挡, 线性变换, soft shadow, region, distance, depth, attenuation, rendering, occlusion, linear transformation

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116012520 A (TENCENT TECHNOLOGY (SHENZHEN) CO., LTD.) 25 April 2023 (2023-04-25)<br>claims 1-16, and description, paragraphs [0004]-[0136] | 1-15 |
| A | CN 115546389 A (NETEASE (HANGZHOU) NETWORK CO., LTD.) 30 December 2022 (2022-12-30)<br>description, paragraphs [0027]-[0132] | 1-15 |
| A | CN 114119854 A (BEIJING BYTEDANCE NETWORK TECHNOLOGY CO., LTD.) 01 March 2022 (2022-03-01)<br>entire document | 1-15 |
| A | US 2014176546 A1 (NVIDIA CORP.) 26 June 2014 (2014-06-26)<br>entire document | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 April 2024** | **05 May 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/076534** |

| Patent document cited in search report | | | Publication date (day/month/year) | Patent family member(s) | | | Publication date (day/month/year) |
| --- | --- | --- | --- | --- | --- | --- | --- |
| CN | 116012520 | A | 25 April 2023 | CN | 116012520 | B | 02 June 2023 |
| CN | 115546389 | A | 30 December 2022 | None | | | |
| CN | 114119854 | A | 01 March 2022 | None | | | |
| US | 2014176546 | A1 | 26 June 2014 | US | 8872827 | B2 | 28 October 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023102884260